# EUROPEAN PATENT SPECIFICATION

(11) **EP 3 103 723 B1**
(45) Date of publication and mention of the grant of the patent: **01.07.2020**
(21) Application number: 16159057.5
(22) Date of filing: 08.03.2016
(51) Int. Cl.: B64D 29/00, B64D 33/02, F02C 7/04

(54) **NACELLE INLET HAVING AN ANGLE OR CURVED AFT BULKHEAD**
GONDELEINLASSÖFFNUNGEN MIT EINEM WINKEL ODER GEKRÜMMTEN HECKSCHOTT
ENTRÉE DE NACELLE COMPRENANT UNE CLOISON ARRIÈRE ANGULAIRE OU INCURVÉE

(30) Priority: 03.06.2015 US 201514729420
(43) Date of publication of application: 14.12.2016
(73) Proprietor: The Boeing Company, Chicago, IL 60606-1596 (US)
(72) Inventor: BOL, Eric D., SEATTLE, WA Washington 98124-2207 (US)
(74) Representative: Plasseraud IP

(56) References cited:
- EP-A1- 1 582 701
- EP-A2- 2 241 504
- EP-A2- 2 336 500
- WO-A1-2011/157953
- FR-A1- 2 936 776
- US-A1- 2010 000 227
- US-A1- 2010 176 250
- US-A1- 2012 090 694
- US-A1- 2014 127 001
- US-B1- 6 725 542

## Description

### FIELD

This disclosure pertains to the construction of a nacelle inlet of an aircraft engine. More specifically, the disclosure is directed to a construction of a nacelle inlet aft bulkhead. The aft bulkhead has a curved or angled cross-section configuration between a connection of an outer edge of the aft bulkhead to an outer barrel of the nacelle inlet and a connection of an inner edge of the aft bulkhead to an aircraft engine fan case attachment ring. The curved or angled cross-section configuration of the aft bulkhead gives the bulkhead flexibility to avoid serious damage to the bulkhead in high load cases such as a fan blade off event. The curved or angled cross-section configuration also removes the need for a spring ring attached between the aft bulkhead and the fan case attachment ring. The curved or angled cross-section configuration also provides design flexibility to terminate the outer barrel of the nacelle inlet at an optimized location rearward of the inner barrel of the nacelle inlet and the aircraft engine fan case attachment ring to extend laminar air flow over the nacelle rearward and reduce drag over the nacelle.

### BACKGROUND

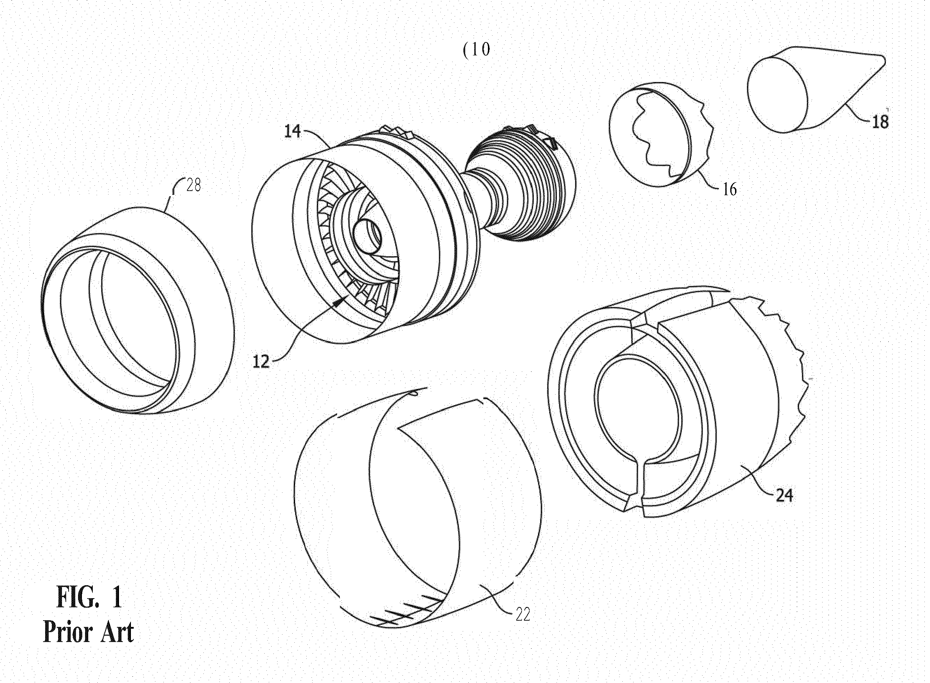

Figure 1 is a representation of the basic component parts that go into the construction of an aircraft engine. The basic component parts include the engine 10 itself that is comprised of a fan 12, an engine fan case 14 surrounding the fan, compressors, combustors, turbines (not shown) inside the engine 10, and an engine exhaust nozzle 16 and exhaust cone 18. The engine 10 is enclosed in a nacelle comprised of a fan cowl 22 and a fan duct/thrust reverser 24. A nacelle inlet 26 is positioned at the forward end of the nacelle.

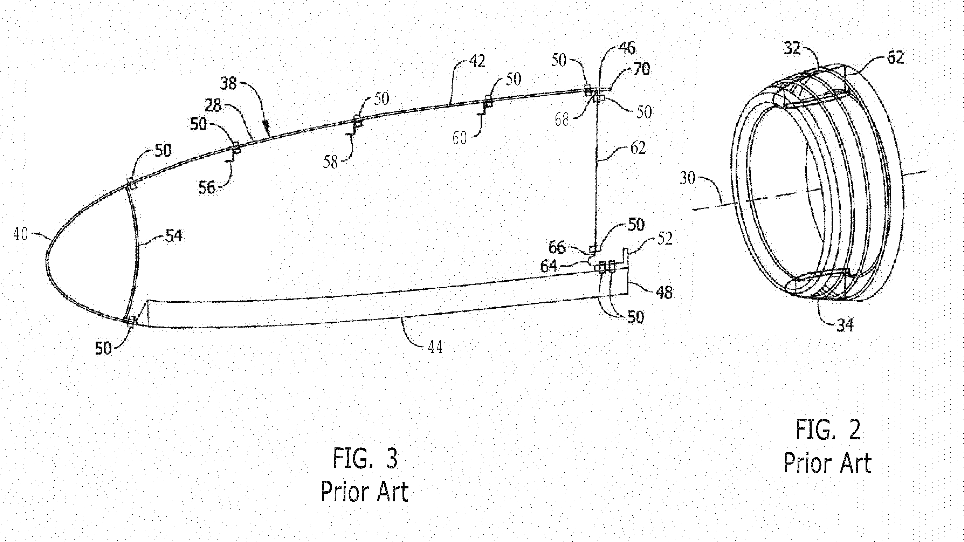

Figure 2 represents the nacelle inlet 28 removed from the engine 10 represented in Figure 1. The nacelle inlet 28 has a general cylindrical configuration with a center axis 30 that defines mutually perpendicular axial and radial directions relative to the nacelle inlet 28. Represented by dashed lines at 32 and 34 are cross-section configurations of the construction of the nacelle inlet at the top of the nacelle inlet and the bottom of the nacelle inlet, respectively. As can be seen in Figure 2, the cross-section configurations 32, 34 are constructed similarly.

Figure 3 is a representation of the cross-section configuration 32 of the nacelle inlet 28 at the top of the nacelle inlet as represented in Figure 2. As represented in Figure 3, the configuration of the nacelle inlet 28 is defined by a lipskin 38. The lipskin 38 has a nose portion 40 at the forward most end of the nacelle inlet 28, an outer barrel 42 on the exterior of the nacelle inlet 28 and an inner barrel 44 on an interior of the nacelle inlet 28. The nose portion 40 of the lipskin 38 has a general U-shaped cross-section configuration. The outer barrel 42 of the lipskin 38 extends from the nose portion 40 rearwardly to a rear edge 46 of the outer barrel 42. The inner barrel 44 of the lipskin 38 extends rearwardly from the nose portion 40 to a rear edge 48 of the inner barrel. In the representation of Figure 3, the lipskin 38 extends from the inner barrel 44, around the nose portion 40 of the lipskin 38 and rearwardly across the outer barrel 42 to the rearward edge 48 as one piece. In other constructions, the lipskin 38 could be constructed with the nose portion 40 and outer barrel 42 being separate parts connected by fasteners 50, represent generally in the drawing figures.

An engine fan case attachment ring 52 is connected to the rear edge 48 of the inner barrel 44. The engine fan case attachment ring 52 extends completely around the cylindrical configuration of the nacelle inlet 28. The engine fan case attachment ring 52 is attached to the engine fan case 14. The attachment of the engine fan case attachment ring 52 to the engine fan case 14 supports the nacelle inlet 28 on the engine fan case 14.

There are several bulkheads and stiffeners constructed inside the nacelle inlet 28 that reinforce the construction of the inlet. A forward bulkhead 54 having an annular configuration is secured between the outer barrel 42 and the inner barrel 44 inside the nacelle inlet 28. The forward bulkhead 54 extends completely around a cylindrical configuration of the nacelle inlet 28 and reinforces the nose portion 40 of the lipskin 38. Several stiffeners 56, 58, 60 are secured to the outer barrel 42 inside the nacelle inlet 28. The stiffeners have L-shaped cross-section configurations and extend completely around the cylindrical configuration of the nacelle inlet 28 reinforcing the outer barrel 42. An aft bulkhead 62 is secured between the outer barrel 42 and the engine fan case attachment ring 52 inside the nacelle inlet 28. The aft bulkhead 62 has an annular configuration that extends around the cylindrical configuration of the nacelle inlet 28. As represented in Figure 3, the aft bulkhead 62 has substantially a flat panel structure except for a spring ring 64 having a C-shaped cross-section at an inner edge of the aft bulkhead 62. The spring ring 64 connects an inner edge of the aft bulkhead 62 to the engine fan case attachment ring 52. An outer edge 68 of the aft bulkhead 62 is connected to the outer barrel rear edge 46 by an outer T-ring 70.

The aft bulkhead 62 adds stiffness and rigidity to the construction of the nacelle inlet 28. The aft bulkhead 62 also transmits loads from the engine fan case and the attached engine fan case attachment ring 52 through the aft bulkhead 62 to the outer barrel 42 of the nacelle inlet 28. With the aft bulkhead 62 providing a supporting connection between the outer barrel 42 and the engine fan case attachment ring 52, it is possible that any extreme loads on the engine fan case 12 could be transmitted through the engine fan case attachment ring 52 and through the aft bulkhead 62 to the outer barrel 42 of the nacelle inlet 28 causing excessive damage to the nacelle inlet. Such extreme loads could be produced by a fan blade off event. A fan blade off event is basically the engine fan 12 losing a fan blade that impacts with the fan case 14 at high speed. The fan case 14 is designed to completely contain the fan blade, preventing the fan blade from penetrating the fan case 14. Losing a fan blade at high fan speeds exerts enormous loads on the fan case 14 that are transmitted through the engine fan case attachment ring 52 to the aft bulkhead 62. If the aft bulkhead 62 is too stiff, the transmitted loads from the fan blade off event can deform or shatter the aft bulkhead 62 resulting in the nacelle inlet 28 losing its structural rigidity. To attenuate any such extreme loads, the spring ring 64 is provided at the attachment of the aft bulkhead 62 to the engine fan case attachment ring 52. Thus, the aft bulkhead 62 and the spring ring 64 provide structural rigidity to the nacelle inlet 28, but avoid the transmission of extreme loads from the engine fan case 12 to the outer barrel 42 of the nacelle inlet 28.

However, the construction of the aft bulkhead 62 with the spring ring 64 is disadvantaged in that the design and attachment of the spring ring 64 on the aft bulkhead 62 and the attachment of the spring ring 64 to the engine fan case attachment ring 52 adds complexity, cost and assembly time. Additionally, the flat aft bulkhead 62 that is generally perpendicular to the nacelle inlet center axis 30 requires that the rear edge 46 of the outer barrel 42 be at a specific location relative to the rear edge 48 of the inner barrel 44. This required positioning of the outer barrel rear edge 46 and the inner barrel rear edge 48 may not be optimal to the construction of the nacelle inlet and the performance of the nacelle inlet 28. Additionally, the generally perpendicular configuration of the aft bulkhead 62 necessarily limits the laminar flow of air for a distance over the nacelle inlet 28. The nacelle is designed for a laminar flow of air over the lipskin nose portion 40, over the lipskin outer barrel 42 and to the fan cowl 22. However, the laminar flow gets disrupted and becomes turbulent at the transition from the lipskin outer barrel 42 to the fan cowl 22. Moving this transition rearwardly would reduce drag.

US2012/0090694 discloses an aircraft nacelle including a lip whose surface contacts with the aerodynamic streams extends inside the nacelle by an inside wall that delimits a layer that empties at a power plant and outside of the nacelle by an outside wall, a first front frame connecting the inside and outside walls, delimiting an annular pipe with the lip, and a rear frame connecting the inside and outside walls at a junction zone between the inside pipe and power plant pipe, for a given cross-section of the nacelle along a plane that contains the longitudinal axis of the nacelle, a point A at the intersection between the rear frame and the inside wall, and a point B at the intersection between the rear frame and the outside wall, with B being offset toward the rear of the nacelle relative to A over more than 50% of the rear frame's periphery.

FR2936776 discloses a structure having an annular external cowl spaced from an annular inner wall, a rear frame connecting the external cowl and the inner wall. A heat insulation unit is arranged on the inner wall, where the rear frame and the heat insulation unit form a single rear structural element that is made of metallic or composite materials. The structural element includes a primary part fixed to the external cowl. The structural element includes a secondary part arranged close to the inner wall. US6725542 discloses a method of assembly for a gas turbine engine and nacelle including the steps of aligning the nacelle assembly and the engine substantially parallel to the rotational axis of the engine and translating the nacelle assembly along the axis to engage a first and a second attachment and securing the first attachment. US2014/127001 discloses an aircraft gas-turbine engine having an engine cowling-nacelle which surrounds a core engine in a tubular way, at least one inflow-side part of the engine cowling-nacelle being telescopically movable against the flow direction. WO2011/157953 discloses an air inlet duct for a turbojet nacelle, comprising an upstream annular lip and a downstream outer annular structure, the upstream annular lip and the downstream outer annular structure being formed as a one-piece part made from composite material and the upstream lip being covered with a metal layer formed, in particular, by electrodeposition or plastic forming.

### SUMMARY

The nacelle inlet of an aircraft engine of this disclosure includes an angled or curved aft bulkhead that overcomes disadvantages associated with existing aft bulkheads of nacelle inlets while still providing stiffness and rigidity to the nacelle inlet and flexibility to the aft bulkhead.

The nacelle inlet has a lipskin nose at a forward end of the nacelle inlet. An outer barrel extends rearwardly from the lipskin nose on an exterior of the nacelle inlet. The outer barrel extends rearwardly from the lipskin nose to a rear edge of the outer barrel.

An inner barrel extends rearwardly from the lipskin nose on an interior of the nacelle inlet. The inner barrel extends rearwardly from the lipskin nose to a rear edge of the inner barrel.

An engine fan case attachment ring is connected to the rear edge of the inner barrel. The engine fan case attachment ring enables the nacelle inlet to be attached to and supported by the fan case of an aircraft engine.

The angled or curved aft bulkhead is connected between the outer barrel and the inner barrel. The aft bulkhead has an outer edge that is connected to the rear edge of the outer barrel. The aft bulkhead has an inner edge that is connected to the engine fan case attachment ring. The aft bulkhead is configured so that, as the aft bulkhead extends from the inner edge of the aft bulkhead to the outer edge of the aft bulkhead, the aft bulkhead extends rearwardly relative to the nacelle inlet. In one configuration of the aft bulkhead, the aft bulkhead has a rear surface that extends as a flat surface from the inner edge of the aft bulkhead to the outer edge of the aft bulkhead. In a further configuration of the aft bulkhead, the aft bulkhead has a rear surface with a concave configuration between the aft bulkhead inner edge and the aft bulkhead outer edge. These configurations of the aft bulkhead rear surface enable the rear edge of the outer barrel to be positioned rearwardly of the rear edge of the inner barrel and rearwardly of the engine fan case attachment ring. This provides flexibility in the relative positioning of the rear edge of the outer barrel and the rear edge of the inner barrel of the nacelle inlet and the engine fan case attachment ring. Furthermore, the configurations of the rear surface of the aft bulkhead enables the transition from the lipskin outer barrel to the fan cowl to be moved rearwardly relative to the engine fan case attachment ring. This enables a longer run of laminar air flow over the nacelle and reduces drag.

Still further, the angled or curved configuration of the aft bulkhead enables the aft bulkhead to be connected directly to the lipskin outer barrel eliminating a need for a T-ring connection and provides flexibility in the aft bulkhead and flexibility between the outer barrel and the engine fan case attachment ring connecting the nacelle inlet to the fan case of an aircraft engine. The configurations attenuate forces transmitted to the aft bulkhead from the engine fan case attachment ring and through the aft bulkhead to the outer barrel.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

Further features of the nacelle inlet of an aircraft engine having an angle or curved aft bulkhead are set forth in the following detailed description and drawing figures.
Figure 1 is a representation of an exploded view of the basic component parts of an aircraft engine.
Figure 2 is a representation of a typical nacelle inlet.
Figure 3 is a representation of a cross-section through the nacelle inlet of Figure 2 taken at the top of the nacelle inlet.
Figure 4 is a representation of the nacelle inlet of an aircraft engine of this disclosure having an angled aft bulkhead.
Figure 5 is a representation of a cross-section of the nacelle inlet of Figure 4 taken through the top of the nacelle inlet.
Figure 6 is a representation of the nacelle inlet of an aircraft engine of this disclosure having a curved aft bulkhead.
Figure 7 is a representation of a cross-section of the nacelle inlet of Figure 6 taken through the top of the nacelle inlet.

### DESCRIPTION

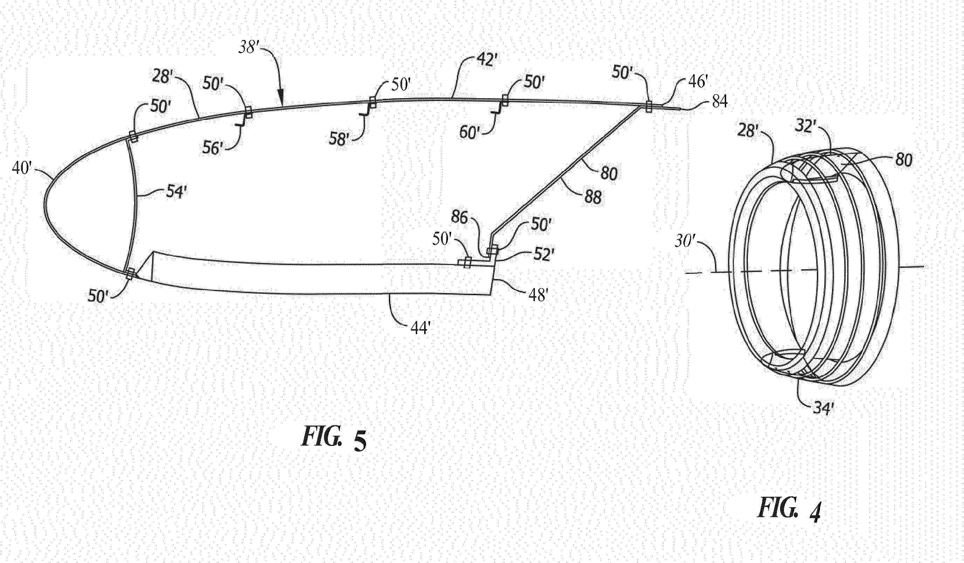

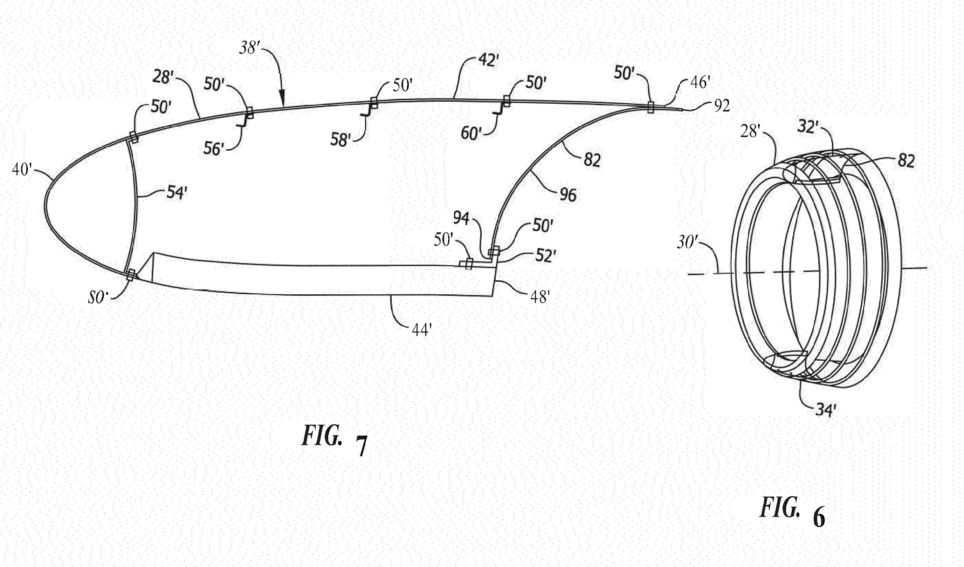

Figures 4 and 5 show representations of the nacelle inlet of an aircraft engine of this disclosure that includes an angled aft bulkhead 80 that overcomes disadvantages associated with existing aft bulkheads of nacelle inlets while still providing stiffness and rigidity to the nacelle inlet and flexibility to the aft bulkhead 80. Figures 6 and 7 show representations of a nacelle inlet of an aircraft engine that includes a curved aft bulkhead 82 that overcomes disadvantages associated with existing aft bulkheads of nacelle inlets while still providing stiffness and rigidity to the nacelle inlet and flexibility to the aft bulkhead 82. Because both of the aft bulkheads 80, 82 of this disclosure are employed in nacelle inlet constructions such as that of the nacelle inlet 28 described in the background portion of this disclosure, the construction of the nacelle inlet 28 will not again be described in detail herein. It should be understood that the aft bulkheads 80, 82 of this disclosure can be employed in the construction of the nacelle inlet 28 described earlier, or other equivalent nacelle inlets. Because the constructions of the nacelle inlets 28 represented in Figures 5 and 7 are basically the same as the nacelle inlet represented in Figure 3, the same reference numbers employed in Figure 3 are again employed in the representations of the nacelle inlets 28 of Figures 5 and 7 with the reference numbers followed by a prime (').

Referring to Figures 4 and 5, the nacelle inlet 28' has a lipskin nose 40' at a forward end of the nacelle inlet 28'. An outer barrel 42' extends rearwardly from the lipskin nose 40' and the forward bulkhead 54' on an exterior of the nacelle inlet 28'. The outer barrel 42' extends rearwardly from the lipskin nose 40' to a rear edge 46' of the outer barrel. Note that the rear edge 46' of the outer barrel 42' is moved rearwardly on the nacelle inlet 28 compared to the rear edge 46 of the outer barrel 42 represented in Figure 3.

An inner barrel 44' extends rearwardly from the lipskin nose 40 and the forward bulkhead 54' on an interior of the nacelle inlet 28'. The inner barrel 44' extends rearwardly from the lipskin nose 40' and the forward bulkhead 54' to a rear edge of the inner barrel 48'.

An engine fan case attachment ring 52' is connected to the inner barrel 44'. The engine fan case attachment ring 52' is connected to the rear edge 48' of the inner barrel 44'. The engine fan case attachment ring 52' enables the nacelle inlet 28' to be attached to and supported by the fan case of an aircraft engine.

The construction of the nacelle inlet 28' represented in Figures 4 and 5 differs from the construction of the previously described nacelle inlet 28 of Figure 3 by the aft bulkhead 80 included in the nacelle inlet construction.

The aft bulkhead 80 is secured between the outer barrel 42' and the engine fan case attachment ring 52' inside the nacelle inlet 28'. The aft bulkhead 80 has an annular configuration that extends around the cylindrical configuration of the nacelle inlet 28'. The aft bulkhead 80 has a circular outer edge 84 that is connected to the rear edge 46' of the outer barrel 42'. Note that the connection of the aft bulkhead outer edge 84 is directly to the outer barrel rear edge 46', eliminating the need and cost for the T-ring 70 represented in Figure 3. The aft bulkhead 80 also has a circular inner edge 86 that is connected to the engine fan case attachment ring 52. As represented in Figures 4 and 5, the aft bulkhead 80 has a substantially flat configuration as it extends between the aft bulkhead outer edge 84 and aft bulkhead inner edge 86. Additionally, the aft bulkhead 80 extends rearwardly relative to the nacelle inlet 28' as the aft bulkhead extends from its inner edge 86 to its outer edge 84. The angled configuration of the aft bulkhead 80 represented in Figures 4 and 5 enables the relative position of the rear edge 46' of the outer barrel 42' to be moved relative to the engine fan case attachment ring 52' simply by changing the angle of the aft bulkhead 80. This flexibility of the relative positions of the rear edge 46' of the outer barrel 42' and the engine fan case attachment ring 52' enables the nacelle inlet 28' of Figures 4 and 5 to be used in a variety of different applications. It also enables the outer barrel rear edge 46' to be positioned at an optimized location relative to the engine fan case attachment ring 52'. Furthermore, the angled orientation of the aft bulkhead 80 enables the transition from the lipskin outer barrel rear edge 46' to the fan cowl 22 to be moved rearwardly relative to the engine fan case attachment ring 52' and relative to the rest of the nacelle. This increases the run of laminar air flow over the nacelle and reduces drag.

Still further, the angled orientation of the aft bulkhead 80 provides flexibility in the aft bulkhead and flexibility between the rear edge 46' of the outer barrel 42' and the engine fan case attachment ring 52'. The angled orientation of the aft bulkhead 80 between the engine fan case attachment ring 52' and the rear edge 48' of the outer barrel 42' attenuates forces transmitted through the aft bulkhead 80 from the engine fan case attachment ring 52' to the rear edge 46' of the outer barrel 42'.

The construction of the nacelle inlet 28' represented in Figures 6 and 7 differs from the construction of the previously described nacelle inlet 28 of Figure 3 by the aft bulkhead 82 included in the nacelle inlet construction.

The aft bulkhead 82 is secured between the outer barrel 42' and the engine fan case attachment ring 52' inside the nacelle inlet 28. The aft bulkhead 80 has an annular configuration that extends around the cylindrical configuration of the nacelle inlet 28'. The aft bulkhead 82 has a circular outer edge 92 that is connected to the rear edge 46' of the outer barrel 42'. Again, note that the connection of the aft bulkhead outer edge 92 is directly to the outer barrel rear edge 46', eliminating the need and cost for the T-ring 70 connection of Fig. 3. The aft bulkhead 82 also has a circular inner edge 94 that is connected to the engine fan case attachment ring 52'. As represented in Figures 6 and 7, the aft bulkhead 82 has a curved configuration as it extends between the aft bulkhead outer edge 92 and aft bulkhead inner edge 94. Additionally, the aft bulkhead 82 curves rearwardly relative to the nacelle inlet 28 as the aft bulkhead extends from its inner edge 94 to its outer edge 92. The curved configuration of the aft bulkhead 82 represented in Figures 6 and 7 enables the relative position of the rear edge 46' of the outer barrel 42' to be moved relative to the engine fan case attachment ring 52' simply by changing the curvature of the aft bulkhead 82. This flexibility of the relative positions of the rear edge 46' of the outer barrel 42 and the engine fan case attachment ring 52' enables the nacelle inlet 28 of Figures 6 and 7 to be used in a variety of different applications. It also enables the outer barrel rear edge 46' to be positioned at an optimized location relative to the engine fan case attachment ring 52'. Furthermore, the curved orientation of the aft bulkhead 82 enables the transition from the lipskin outer barrel rear edge 46' to the fan cowl 22 to be moved rearwardly relative to the engine fan case attachment ring 52' and relative to the rest of the nacelle. This increases the run of laminar air flow over the nacelle and reduces drag.

Still further, the curved orientation of the aft bulkhead 82 provides flexibility in the aft bulkhead and flexibility between the rear edge 46' of the outer barrel 42' and the engine fan case attachment ring 52'. The curved orientation of the aft bulkhead 82 between the engine fan case attachment ring 52' and the rear edge 46' of the outer barrel 42' attenuates forces transmitted through the aft bulkhead 82 from the engine fan case attachment ring 52' to the rear edge 46' of the outer barrel 42'.

As various modifications could be made in the construction of the nacelle inlet and its method of operation herein described and illustrated, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto.

## Claims

1. A nacelle inlet (28') of an aircraft engine comprising:
a lipskin (40') on a forward end of the nacelle inlet;
an outer barrel (42') on an exterior of the nacelle inlet, the outer barrel extending rearwardly from the lipskin to a rear edge (46') of the outer barrel;
an inner barrel (44') on an interior of the nacelle inlet, extending rearwardly from the lipskin to a rear edge (48') of the inner barrel;
the rear edge (46') of the outer barrel (42') being positioned rearwardly of the rear edge (48') of the inner barrel (44'), and
an aft bulkhead (82) connected between the rear edge (46') of the outer barrel (42') and the rear edge (48') of the inner barrel (44'), the aft bulkhead having an outer edge (92) connected to the rear edge (46') of the outer barrel (42') and an inner edge (94) connected to the rear edge of the inner barrel (44'), the aft bulkhead having a rearward surface which has a curved configuration between the rear edge (46') of the outer barrel (42') and the rear edge (48') of the inner barrel (44'), the aft bulkhead being curved rearwardly relative to the nacelle inlet as the aft bulkhead extends from the inner edge (94) to the outer edge (92).

2. The nacelle inlet (28') of claim 1, wherein the outer edge (92) of the aft bulkhead (82) is positioned rearwardly of the inner edge (94) of the aft bulkhead.

3. The nacelle inlet (28') of claim 2, further comprising:
an engine fan case attachment ring (52');
the inner edge of the aft bulkhead being connected to the engine fan case attachment ring (52');
the inner barrel (44') being connected to the engine fan case attachment ring (52');
the outer edge of the aft bulkhead being connected to the rear edge of the outer barrel, and the rear edge of the outer barrel being positioned rearwardly of the engine fan case attachment ring (52').

4. The nacelle inlet (28') of claim 3, wherein the engine fan case attachment ring (52') is connected to the rear edge (48') of the inner barrel (44').

5. The nacelle inlet (28') of any of the preceding claims, wherein the aft bulkhead rearward surface is a continuous surface that extends between the rear edge (46') of the outer barrel (42') and the rear edge (48') of the inner barrel (44').

6. A method of absorbing force from a fan blade off event exerted on an aft bulkhead (82) of a nacelle inlet (28'), the method comprising:
connecting an outer edge (92) of the aft bulkhead to an outer barrel (42') of the nacelle inlet and connecting an inner edge (94) of the aft bulkhead to an inner barrel (44') of the nacelle inlet where the aft bulkhead outer edge is positioned rearwardly of the aft bulkhead inner edge, the aft bulkhead having a rearward surface which has a curved configuration between the rear edge (46') of the outer barrel (42') and the rear edge (48') of the inner barrel (44'), the aft bulkhead being curved rearwardly relative to the nacelle inlet as the aft bulkhead extends from the inner edge (94) to the outer edge (92).

## Patentansprüche

1. Maschinenhauseinlass (28') eines Flugzeugtriebwerks, aufweisend:
eine Lippenhaut (40') an einem vorderen Ende des Maschinenhauseinlasses;
einen Außenzylinder (44') an einer Außenseite des Maschinenhauseinlasses, wobei der Außenzylinder sich von der Lippenhaut nach hinten zu einer Rückkante (46') des Außenzylinders erstreckt;
einen Innenzylinder (44') an einem Inneren des Maschinenhauseinlasses, der sich von der Lippenhaut nach hinten zu einer Rückkante (48') des Innenzylinders erstreckt;
wobei die Rückkante (46') des Außenzylinders (47') hinter der Rückkante (48') des Innenzylinders (44') angeordnet ist, und
ein Heckschott (82), das zwischen der Rückkante (46') des Außenzylinders (42') und der Rückkante (48') des Innenzylinders (44') angebracht ist, wobei das Heckschott eine mit der Rückkante (46') des Außenzylinders (42') verbundene Außenkante (92) und eine mit der Rückkante des Innenzylinders (44') verbundene Innenkante (94) hat, das Heckschott eine Rückfläche hat, die eine gekrümmte Konfiguration zwischen der Rückkante (46') des Außenzylinders (42') und der Rückkante (48') des Innenzylinders (44') hat, das Heckschott, indem es sich von der Innenkante (94) zur Außenkante (92) erstreckt, relativ zu dem Maschinenhauseinlass nach hinten gekrümmt ist.

2. Maschinenhauseinlass (28') nach Anspruch 1, wobei die Außenkante (92) des Heckschotts (82) hinter der Innenkante (94) des Heckschotts angeordnet ist.

3. Maschinenhauseinlass (28') nach Anspruch 2, weiterhin aufweisend:
einen Triebwerksgebläsegehäuse-Befestigungsring (52');
wobei die Innenkante des Heckschotts mit dem Triebwerksgebläsegehäuse-Befestigungsring (52') verbunden ist;
der Innenzylinder (44') mit dem Triebwerksgebläsegehäuse-Befestigungsring (52') verbunden ist;
die Außenkante des Heckschotts mit der Rückkante des Außenzylinders verbunden ist und die Rückkante des Außenzylinders hinter dem Triebwerksgebläsegehäuse-Befestigungsring (52') angeordnet ist.

4. Maschinenhauseinlass (28') nach Anspruch 3, wobei der Triebwerksgebläsegehäuse-Befestigungsring (52') mit der Rückkante (48') des Innenzylinders (44') verbunden ist.

5. Maschinenhauseinlass (28') nach einem der vorstehenden Ansprüche, wobei die Heckschott-Rückfläche eine kontinuierliche Fläche ist, die sich zwischen der Rückkante (46') des Außenzylinders (42') und der Rückkante (48') des Innenzylinders (44') erstreckt.

6. Verfahren zum Absorbieren einer auf ein Heckschott (82) eines Maschinenhauseinlasses (28') ausgeübten Kraft aus einem "fan blade off"-Ereignis, wobei das Verfahren aufweist:
Verbinden einer Außenkante (92) des Heckschotts mit einem Außenzylinder (42') des Maschinenhauseinlasses und Verbinden einer Innenkante (94) des Heckschotts mit einem Innenzylinder (44') des Maschinenhauseinlasses, wobei die Heckschott-Außenkante hinter der Heckschott-Innenkante angeordnet ist, das Heckschott eine Rückfläche hat, die eine gekrümmte Konfiguration zwischen der Rückkante (46') des Außenzylinders (42') und der Rückkante (48') des Innenzylinders hat, das Heckschott, indem es sich von der Innenkante (94) zur Außenkante (92) erstreckt, relativ zu dem Maschinenhauseinlass nach hinten gekrümmt ist.

## Revendications

1. Entrée de nacelle (28') d'un moteur d'aéronef comprenant :
un revêtement de lèvre (40') sur une extrémité avant de l'entrée de nacelle ;
un capot externe (42') sur un extérieur de l'entrée de nacelle, le capot externe s'étendant vers l'arrière depuis le revêtement de lèvre jusqu'à un bord arrière (46') du capot externe ;
un capot interne (44') sur un intérieur de l'entrée de nacelle, s'étendant vers l'arrière depuis le revêtement de lèvre jusqu'à un bord arrière (48') du capot interne ;
le bord arrière (46') du capot externe (42') étant positionné vers l'arrière du bord arrière (48') du capot interne (44'), et
une cloison arrière (82) reliée entre le bord arrière (46') du capot externe (42') et le bord arrière (48') du capot interne (44'), la cloison arrière ayant un bord externe (92) relié au bord arrière (46') du capot externe (42') et un bord interne (94) relié au bord arrière du capot interne (44'), la cloison arrière ayant une surface vers l'arrière qui a une configuration incurvée entre le bord arrière (46') du capot externe (42') et le bord arrière (48') du capot interne (44'), la cloison arrière étant incurvée vers l'arrière par rapport à l'entrée de nacelle à mesure que la cloison arrière s'étend depuis le bord interne (94) jusqu'au bord externe (92).

2. Entrée de nacelle (28') selon la revendication 1, dans laquelle le bord externe (92) de la cloison arrière (82) est positionné vers l'arrière du bord interne (94) de la cloison arrière.

3. Entrée de nacelle (28') selon la revendication 2, comprenant en outre :
une virole de fixation de carter de soufflante de moteur (52') ;
le bord interne de la cloison arrière étant relié à la virole de fixation de carter de soufflante de moteur (52') ;
le capot interne (44') étant relié à la virole de fixation de carter de soufflante de moteur (52') ;
le bord externe de la cloison arrière étant relié au bord arrière du capot externe, et le bord arrière du capot externe étant positionné vers l'arrière de la virole de fixation de carter de soufflante de moteur (52').

4. Entrée de nacelle (28') selon la revendication 3, dans laquelle la virole de fixation de carter de soufflante de moteur (52') est reliée au bord arrière (48') du capot interne (44').

5. Entrée de nacelle (28') selon l'une quelconque des revendications précédentes, dans laquelle la surface vers l'arrière de cloison arrière est une surface continue qui s'étend entre le bord arrière (46') du capot externe (42') et le bord arrière (48') du capot interne (44').

6. Procédé d'absorption d'une force provenant d'un événement de détachement d'aube de soufflante exercée sur une cloison arrière (82) d'une entrée de nacelle (28'), le procédé comprenant :
la liaison d'un bord externe (92) de la cloison arrière à un capot externe (42') de l'entrée de nacelle et la liaison d'un bord interne (94) de la cloison arrière à un capot interne (44') de l'entrée de nacelle où le bord externe de cloison arrière est positionné vers l'arrière du bord interne de cloison arrière, la cloison arrière ayant une surface vers l'arrière qui a une configuration incurvée entre le bord arrière (46') du capot externe (42') et le bord arrière (48') du capot interne (44'), la cloison arrière étant incurvée vers l'arrière par rapport à l'entrée de nacelle à mesure que la cloison arrière s'étend depuis le bord interne (94) jusqu'au bord externe (92).
